# EUROPEAN PATENT SPECIFICATION

(11) **EP 0 629 181 B1**
(45) Date of publication and mention of the grant of the patent: **09.04.1997**
(21) Application number: 93907106.4
(22) Date of filing: 26.02.1993
(51) Int. Cl.: C04B 35/58, C04B 35/599

(54) **SiA1ON COMPOSITES AND METHOD OF PREPARING THE SAME**
SIALON-VERBUNDWERKSTOFFE UND VERFAHREN ZU IHRER HERSTELLUNG
COMPOSES SiA1ON ET LEUR PROCEDE DE PREPARATION

(30) Priority: 06.03.1992 US 847522
(43) Date of publication of application: 21.12.1994
(73) Proprietor: THE DOW CHEMICAL COMPANY, Midland, Michigan 48640 (US)
(72) Inventor: HWANG, Chinmau, James, Midland, MI 48640 (US); BEAMAN, Donald, R., Midland, MI 48640 (US)
(74) Representative: Burford, Anthony Frederick
(86) International application number: PCT/US93/01822
(87) International publication number: WO 93/17981

(56) References cited:
- EP-A- 0 250 592
- EP-A- 0 338 718

## Description

This invention relates generally to SiAlON composites and a method of preparing the same. It more particularly relates to multi-phase SiAlON materials having at least an alpha-SiAlON (α-SiAlON) phase prepared from a multi-cationic mixture including oxides and nitrides of strontium, where the α-SiAlON phase includes fine elongate grains containing strontium, at least one of yttrium or a rare earth metal, and at least one other metal such as Ca, Mg, Li or Na.

Ceramic materials made from SiAlON have recently been investigated for high temperature industrial applications due to excellent properties, such as high toughness, elevated temperature strength, and oxidation resistance. Prior art compositions and methods have attempted to rid SiAlON materials of glass phases incorporated therein as they typically cause high temperature degradation. One such attempt focuses upon removing oxide sintering additives because they form glasses that remain in grain boundaries, and reduce the overall strength of the material. A second attempt teaches combining α-SiAlON with beta-SiAlON (β-SiAlON) because the β-SiAlON contains elongate lath-like microstructures. This leads, however, to formation of undesirable residual glass phases in grain boundaries between the α- and β- phases.

Various multi-phase SiAlON sintered bodies containing both α- and β-SiAlON are known in the art. The bodies do not, however, have strontium incorporated into the α-SiAlON structure. One explanation for the absence of strontium is a belief that cationic strontium atoms are too large to fit interstitially into positions within the alpha-phase matrix.

Strontium oxide (SrO) is a known sintering aid that may be incorporated into silicon nitride (Si₃N₄) bodies. For example, US-A-4,870,036 teaches an improved Si₃N₄ material characterized by high mechanical strength at high temperatures and comprising a combination of approximately 0.5-6.0 percent by weight (wt-%) of SrO, 2.0 to 12.0 wt-% Y₂O₃ and the balance Si₃N₄. In addition, US-A-4,692,420 teaches a Si₃N₄ sintered body consisting essentially of Mg, Sr, Ce and Al. These compounds are utilized in the form of their respective oxides in combination with the Si₃N₄.

One aspect of the present invention is a SiAlON ceramic material that contains a mixture of at least three phases: (1) an α-SiAlON phase; (2) a β-SiAlON phase; and (3) an intergranular amorphous phase. The α-SiAlON phase contains strontium and exists as elongate fine grains and fine laths while the β-SiAlON phase exists as large laths. The intergranular amorphous phase can be partially crystallized. By adjusting the relative amounts of these three phases, the materials can be tailored to give high hardness, excellent elevated temperature strength, good creep resistance and good oxidation resistance.

Incorporating strontium into an α-SiAlON phase is generally known in the art to be difficult. This invention incorporates strontium into the α-SiAlON phase by combining Si₃N₄, AlN and a multi-cationic mixture. The mixture includes: a compound selected from the oxides and nitrides of Sr; at least one compound selected from the oxides and nitrides of Ca, Mg, Li and Na; and at least one compound selected from the oxides and nitrides of yttrium or rare earth elements.

The incorporation of strontium provides an α-phase with elongate grains. The α-phase is therefore morphologically similar to the β-phase. It does, however, provide greater strength at higher temperatures than pure β-phase SiAlON, without sacrificing toughness.

Another aspect of the present invention is a method of producing a SiAlON ceramic material of the invention. The methcd includes three steps: (a) preparing a mixture of precursor materials wherein all percentages are based on total weight of precursor materials that includes Si₃N₄ in an amount between 75 and 98 weight percent, AlN in an amount between 0.2 and 20 weight percent, and a multi-cationic mixture composition that includes (1) a compound selected from oxides and nitrides of Sr in an amount between 0.15 and 5.0 weight percent, (2) at least one compound selected from oxides and nitrides of Ca, Mg, Li and Na in an amount between 0.10 and 10.0 weight percent, and (3) at least one compound selected from oxides and nitrides of yttrium or rare earth elements in an amount between 0.1 and 10.0 weight percent; (b) attrition milling the mixture with attritor media in a solvent followed by drying and separating the mixture from the attritor media; and (c) hot pressing the mixture at a pressure of between 3,000 (20.7 MPa) and 6,000 psi (41.3 MPa) and a temperature of between 1550°C and 1950°C for at least 15 minutes.

The SiAlON ceramic material of the present invention is a mixture of at least three phases. The three phases are an α-SiAlON phase, a β-SiAlON phase and an intergranular amorphous morphology phase.

The α-SiAlON phase is represented by general formula Mₓ(Si,Al)₁₂(O,N)₁₆ wherein 0 < x ≤ 2 and M is a mixture of (i) Sr; (ii) at least one element selected from Ca, Mg, Li and Na; and (iii) at least one element selected from the rare earth elements and yttrium. M is preferably a mixture of Sr, Ca and Y. If the value of x exceeds 2, the M component cannot completely occupy positions within the crystal lattice in the form of a solid solution. Most preferably, x is less than 1. The α-SiAlON phase has been found to be a crystalline phase existing as fine grains and fine laths. Micrographs taken with an analytical transmission electron microscope (ATEM) or a scanning electron microscope (SEM) reveal that the α-phase contains fine elongate grains, or laths, having a diameter of less than 0.2 micrometers (µm), and fine equiaxed grains having diameters of less than 0.2 µm. Chemical analysis by electron microprobe analysis (EMPA) and ATEM indicates that the fine grains are α-SiAlON containing strontium.

The β-SiAlON phase is represented by general formula Si_{6-y}Al_{y}O_{y}N_{8-y} wherein 0 < y ≤ 4.3. β-SiAlON compositions wherein y is greater than 4.3 may not exist. Even within the above described range, if the value of y is too large, excessive grain growth results. Excessive grain growth leads, in turn, to formation of large pores in the resulting materials. Large pores typically lead to a reduction in the strength of the ceramic material. The value of y is preferably larger than 0 but not more than 2, most preferably not more than 1. An SEM micrograph reveals elongate grains, some of which have a diameter of greater than 1 µm. These grains are determined by EMPA and ATEM to be β-SiAlON.

The presence of elongate grains in both the α-phase and the β-phase provides enough structural similarity to allow a mixture of α- and β-phases to be substituted for a pure β-phase. The mixture is believed to provide greater strength at elevated temperatures than pure β-SiAlON. The weight percent ratio of α- to β-SiAlON is preferably from 10:90 to 90:10, more preferably from 20:80 to 60:40.

The intergranular amorphous morphology phase contains Si, Al, O and N in combination with (i) Sr; (ii) at least one element selected from Ca, Mg, Li, and Na; and (iii) at least one element selected from rare earth elements and yttrium. This phase usually is present in an amount greater than 0 vol-% but less than 15 vol-%, based on the total SiAlON composition volume. The amount is preferably less than 10 vol-%, most preferably less than 5 vol-%.

Test results show that the SiAlON ceramic material of the present invention contains little or no glassy phase. It is believed that the incorporation of the cationic mixture into the α-phase promotes a reduction in the amount of glassy phase and facilitates densification of ceramic materials that contain such an α-phase. At temperatures used in hot pressing, a glassy phase forms from the multi-cationic mixture and oxides present on the surface of the AlN and Si₃N₄ starting materials. The Si₃N₄ at least partially dissolves in the glassy phase, then precipitates out as grains of α-SiAlON and β-SiAlON. As α-SiAlON forms, it removes components from the glassy phase, thereby reducing the amount of glassy phase present in the resultant product.

The multi-phase ceramic material described herein is prepared by the following method. First, a powder mixture of precursor materials is prepared. A preferred method of preparing the powder mixture includes using an attritor, with zirconia balls as the attritor media, to prepare a finely-dispersed suspension of all precursor materials. All weight percentages of precursor materials are based on combined weight of all precursor materials. Si₃N₄ is present in an amount between 75 and 98 wt-% in combination with AlN present in an amount between 0.2 and 20.0 wt-%, preferably between 0.5 and 20 wt-%, more preferably between 1.0 and 10.0 wt-%, and most preferably between 2.0 and 10.0 wt-%. The Si₃N₄ and AlN combination is then mixed with a multi-cationic mixture composition that includes (1) a compound selected from the oxides and nitrides of Sr in an amount between 0.15 and 5.0 wt-%, more preferably between 0.20 and 3.0 wt-% and most preferably between 0.50 and 2.0 wt-%; (2) at least one compound selected from the oxides and nitrides of Ca, Mg, Li and Na in an amount between 0.10 and 10.0 wt-%, more preferably between 0.2 and 5.0 wt-%, most preferably between 0.5 and 5.0 wt-%; and (3) at least one compound selected from the oxides and nitrides of yttrium or rare earth elements present in an amount between 0.1 and 10.0 wt-%, more preferably between 0.3 and 5.0 wt%. This mixture of precursor materials is then attrition milled in a solvent or carrier medium for about one hour. The excess carrier medium is removed, by filtration or otherwise. The mixture is then dried and separated from the attritor media to yield a product having the same proportions as the original ingredients or precursor materials. When the product is converted to a densified material, the proportions are based upon weight of the densified material.

A preferred powder mixture of precursor materials is prepared by mixing between 75 and 98 wt-% Si₃N_{4,} between 0.5 and 20.0 wt-% AlN, between 0.5 and 2.0 wt-% SrO, between 0.10 and 0.50 wt-% CaO and between 1.0 and 5.0 wt-% Y₂O₃. All weights are based on total weight of precursor materials.

Preparation of the finely-divided suspension of Si₃N₄ and the other precursor materials in a carrier medium requires no particular order of addition of components. For example, it is possible to add a powdered combination or powdered components thereof to a colloidal suspension of Si₃N₄ in a carrier medium or vice versa. Alternatively, all components of the powder mixture may be added simultaneously to the carrier medium prior to attrition milling. The latter method is preferred, particularly when an organic carrier medium such as toluene or an alcohol is used.

The carrier medium may be any inorganic or organic compound that is a liquid at room temperature and atmospheric pressure. Examples of suitable carrier media include: water; alcohols, such as methanol, ethanol and isopropanol; ketones, such as acetone and methyl ethyl ketone; aliphatic hydrocarbons, such as pentanes and hexanes; and aromatic hydrocarbons, such as benzene and toluene. The carrier medium is desirably an organic liquid, preferably toluene or an alcohol such as methanol. The function of the carrier medium is to impart a viscosity suitable for mixing the solid powders. Any quantity of carrier medium that achieves this purpose is sufficient. The quantity is preferably sufficient to provide a solids content within a range of from 15 volume percent to 50 volume percent. The range is more preferably from 20 volume percent to 35 volume percent. Below the preferred lower limit, the viscosity may be too low and deagglomeration mixing may be ineffective. Above the preferred upper limit, the viscosity may be too high and deagglomeration mixing may be difficult.

If the carrier medium is toluene, a coupling agent, such as an aluminate coupling agent commercially available from Kenrich Petrochemicals under the trade designation KEN-REACT KA 322, may be used to aid in forming a suspension. When using an alcohol such as methanol, a dispersant such as a polyethylene imine may be used as a mixing aid and a flocculent such as oleic acid may be used to ease recovery of the powder mixture.

To aid in the dispersion of components of the powder mixture, one or more surfactants or dispersants can be added to the suspension. The choice of surfactant(s) or dispersant(s) can vary widely as is well-known in the art. Any amount of surfactant or dispersant that improves dispersion of powder mixture components is acceptable. Typically, the amount of surfactant is in a range of from 0.01 to 2.0 wt-%, based on powder mixture weight.

The components of the powdered combination are added to the carrier medium in any manner that gives rise to a finely dispersed suspension of the components. Typically, the process is conducted in a large vessel at room temperature (taken as 23°C) under air with vigorous stirring. Any common stirring means is suitable, such as a ball-milling device or an attrition mixer. An ultrasonic vibrator may be used in a supplementary manner to break down smaller agglomerates. The attrition mixer is preferred.

Once mixed, the finely-dispersed suspension is ready for processing into greenware by conventional procedures. For example, the suspension can be slip-cast in preparation for sintering. Alternatively, the suspension can be dried into a powder and ground for use in hot-pressing processes. Drying may be accomplished by standard drying means, such as by spray-drying, or preferably, oven drying. The temperature used in drying is typically just below the boiling point of the carrier medium under atmospheric pressure. Preferably, the carrier medium is toluene or an alcohol and the temperature of drying is about 50°C.

After drying, the resulting powder is separated from the attritor media or balls and sieved through a screen to obtain a powder having a maximum agglomerate diameter of about 100 µm. The screen size is preferably less than 60 mesh (250 µm); more preferably, less than 80 mesh (180 µm). The powder obtained on sieving is the powder mixture used in the hot-pressing process of this invention.

The powder mixture is preferably converted to a densified ceramic body by hot-pressing. Conventional hot-pressing equipment yields acceptable results. Hot-pressing may be conducted under an inert atmosphere, such as nitrogen, to prevent the oxidation and decomposition of Si₃N₄ at high temperatures.

Any combination of processing temperature and pressure may be used so long as it yields the novel SiAlON ceramic of this invention. The temperature is desirably between 1550° and 1950°C, preferably from 1750°C to 1870°C, more preferably from 1800°C to 1850°C and most preferably from 1820°C to 1840°C.

Accurate measurement of high temperatures, such as those quoted hereinabove, is technically difficult. Some variation in the preferred temperature range may be observed depending on the method employed in measuring the temperature. The preferred temperatures of this invention are measured by a tungsten-rhenium thermocouple, obtained from and calibrated by the Omega Company.

While the pressure during hot-pressing is important, it is not quite as critical a parameter as the temperature. Typically, the pressure should be sufficient to cause densification of the green body. The pressure is preferably from 155,415 torr (3500 psi) (20.7 MPa) to 310,290 torr (6000 psi) (41.3 MPa); more preferably, from 206,860 torr ( 4000 psi) (27.6 MPa)to 284,432 torr (5500 psi) (37.9 MPa); and most preferably, from 232,717 torr (4500 psi) (31.0 MPa)to 268,918 torr (5200 psi) (35.8 MPa). Below the preferred lower pressure limit, the powder may not be sufficiently densified. Above the preferred upper pressure limit, the powder will densify in a shorter time and at a lower temperature.

The amount of time that the powder mixture is heated under pressure should be sufficient to bring the powder to essentially complete densification. Generally, ram movement is a good indicator of the extent of densification. As long as the ram continues to move, densification is incomplete. When the ram has stopped moving for at least 15 minutes, densification is essentially complete at 99% or greater of the theoretical value. Thus, the time required for hot-pressing is the time during ram movement plus an additional 15 to 30 minutes. The time is preferably within a range of from 15 minutes to 5 hours; more preferably, from 30 to 90 minutes; and most preferably, from 45 to 75 minutes.

Hot-pressing yields SiAlON ceramic articles that can be used as cutting tools and engine components, particularly high wear and high temperature components. A variety of shapes can be made by hot-pressing, one common shape being a flat plate. These plates may range in size from 2 inches (5.1 cm) in length by 1.5 inches (3.8 cm) in width by 0.45 inch (1.1 cm) in thickness to 16 inches (40.6 cm) in length by 16 inches (40.6 cm) in width by 1.0 inch (2.5 cm) in thickness. Smaller and larger plates can also be fabricated, as determined by the size of the hot-pressing plaques. Cutting tools can be fabricated by slicing and grinding these plates into a variety of cutting tool shapes.

The SiAlON ceramic body produced by the process of this invention is a dense material having no significant porosity. Preferably, densification proceeds to greater than 95% of the theoretical value; more preferably, to greater than 97% of the theoretical value; and most preferably, to greater than 99% of the theoretical value.

As measured by X-ray diffraction, SiAlON samples made by the above process exist in α- and β-SiAlON phases. The presence of large, elongate grains, fine elongate grains and fine equiaxed grains is determined by SEM. Quite unexpectedly, the α-phase SiAlON is found to be present as elongate grains similar to the elongate β-phase SiAlON grains, as determined by transmission electron microscopy (TEM) and EMPA.

Prior to testing, a test sample is desirably polished in a special manner. First, the sample is cleaned and rough spots are flattened by use of a 220-grit diamond wheel. Next, a 45-µm diamond wheel is used to start the polishing. Next, the sample is treated to a series of polishings at 30 psi (206.8 Pa) and 200 rpm in the following consecutive manner: 3 five-minute intervals with 30-µm diamond paste, 3 five-minute intervals with 15-µm diamond paste, 3 five-minute intervals with 6-µm diamond paste, 2 five-minute intervals with 1-µm diamond paste, and 1 five-minute interval with 0.25-µm diamond paste. Between each interval, the sample is thoroughly cleansed by washing with water and sonicating for 2 minutes.

The Vickers hardness number of SiAlON materials of this invention is at least 1650 kg/mm² at room temperature. As shown in Table 1, exceptionally high hardness values above 1700 kg/mm², are obtainable with this invention. Preferably, the Vickers hardness number ranges from 1650 kg/mm² to 1985 kg/mm² at room temperature; more preferably, from 1750 kg/mm² to 1985 kg/mm².

The mechanical properties of the SiAlON ceramic body are readily measured by use of standard tests. These values are set forth in Table 1 for the examples of SiAlON compositions following herein. In particular, materials are evaluated for hardness, Palmqvist toughness, fracture strength and fracture toughness. These tests are described hereinafter. Vickers hardness and Palmqvist toughness measurements can be made simultaneously on one test sample after preparation as described above.

The Vickers hardness test measures the resistance of the ceramic material to indentation. A sample, approximately 1 cm in length by 1 cm in width by 1 cm in height, is placed on a flat surface, and indented with a standard Vickers diamond indentor at a crosshead speed of 0.02 in/min (0.05 cm/min). The Vickers hardness number is calculated from the applied load, in this case 14 kg, and the cross-sectional area of the indentation.

The Palmqvist toughness test is an extension of the Vickers test. (See S. Palmqvist in Jerndontorets Annalen, 141 (1957), 300, for a description of the Palmqvist toughness test.) The test sample is prepared and indented as in the Vickers test, but the 14-kg load is held in place for an additional 15 seconds to crack the sample. The measurements of the indented diagonals and the crack lengths are made on a Nikon UM2 microscope at 1000x magnification. The Palmqvist toughness (W) is directly proportional to the applied load (P) and inversely proportional to the crack length (L). The SiAlON body of this invention preferably exhibits a Palmqvist toughness at room temperature of at least 28 kg/mm. The Palmqvist toughness, at room temperature, is more preferably from 28 to 45 kg/mm; most preferably, from 32 to 45 kg/mm.

Fracture toughness measures the resistance of the material to fracture under a dynamic load. In the present invention, two methods are employed to measure fracture toughness. The first is the Chevron notch test. Test bars are prepared as described hereinabove, and additionally scored with a Chevron notch. The test bars are then subjected to a 3-point bend test with 40 mm span and a crosshead speed of 1.0 µm/min. The SiAlON ceramic bodies of this invention desirably have a fracture toughness as measured at room temperature (23°C) by the Chevron notch technique, of greater than 4.5 MPa·(m)^{1/2}. The room temperature fracture toughness preferably ranges from 4.5 MPa·(m)^{1/2} to 6.5 MPa·(m)^{1/2} and is more preferably greater than 5.5 MPa·(m)^{1/2}, most preferably greater than 6 MPa·(m)^{1/2}.

Fracture strength (modulus of rupture) measures the resistance of the material to fracture under a steady load. Test bars are prepared by cutting rectangular bars (45 mm x 4 mm x 3 mm) of the SiAlON ceramic in a plane perpendicular to the pressing direction. The bars are ground on the surfaces parallel to the pressing plates using a 500 grit grinding wheel (Military Standard 1974). The fracture strength is measured using a 4-point bend test with 20 mm span and crosshead speed of 0.5 mm/min. The fracture strength at room temperature is desirably at least 650 MPa, preferably, from 825 MPa to 1250 MPa, and more preferably, from 850 MPa to 950 MPa. The fracture strength at 1200°C is preferably at least 650 MPa, and at 1375°C, is preferably at least 350 MPa.

Physical properties of SiAlON composites can be altered by changing the ratio of the α- and β-SiAlON phases. Optimum Palmqvist toughness is obtained using a ratio of α- to β-phase of about 20:80. However, toughness decreases and hardness of the material increases in samples containing a higher percentage of α-phase. A ratio of α-SiAlON to β-SiAlON of between 20:80 and 60:40 gives the hardness values that are preferably in excess of 1900 kilograms/mm².

The following are calculated a/β ratios of SiAlON composites.

| Nominal | Calculated* |
|---|---|
| 100/0 | 100/0 |
| 60/40 | 84/16 |
| 50/50 | 70/30 |
| 40/60 | 56/44 |
| 30/70 | 50/50 |
| 20/80 | 21/79 |
| 10/90 | 0/100 |

| | |
|---|---|
| $\text{* Based on} \frac{\text{α(102) + α(201)}}{\text{[α(102 + α(201)] + [β(101) + β(201)]}}$ | |

Where α(102), α(201), β(101) and β(201) are peak heights measured from X-ray diffraction patterns.

The following examples serve to illustrate the novel, multi-phase SiAlON material of this invention, the method of preparing the novel SiAlON material and the physical properties of the composition. The examples are not intended to be limiting of the scope of this invention. All percentages are by weight unless otherwise noted. A summary of the physical properties of Examples 1-7 is set forth in Table 1.

### EXAMPLE 1

| Compound | Amount Wt % |
|---|---|
| Si₃N₄ | 97.99 |
| AlN | 1.26 |
| Y₂O₃ | .32 |
| SrO | .18 |
| CaO | .25 |
| Total | $\overline{\text{100.00}}$ |

A mixture of the compounds set forth hereinabove, in the amounts indicated, was attrition milled with ZrO₂ media in methanol for 2 hours to form a powder mixture and was then dried, sieved and stored. About 80 grams of the powder mixture was hot pressed at 5,000 psi (34.5 MPa) into a 0.5" x 1.5 x 2" (1.3 cm x 3.8 cm x 5.1 cm) billet at 1825°C, for 1 hour in flowing nitrogen. The billet was fully dense with a density of 3.24 g/cm³ measured by water immersion. An α- to β-ratio of 10:90 was obtained.

### Example 2

| Compound | Amount Wt % |
|---|---|
| Si₃N₄ | 95.33 |
| AlN | 2.85 |
| Y₂O₃ | 1.01 |
| SrO | 0.56 |
| CaO | 0.25 |
| Total | $\overline{\text{100.00}}$ |

A mixture of the compounds set forth hereinabove in the amounts indicated was attrition milled and hot pressed as in Example 1. A billet density was measured at 3.22 g/cm³. X-ray diffraction showed both α- and β-SiAlON. An α- to β-ratio of 20:80 was obtained.

### EXAMPLE 3

| Compound | Amount Wt % |
|---|---|
| Si₃N₄ | 92.86 |
| AlN | 4.31 |
| Y₂O₃ | 1.66 |
| SrO | 0.92 |
| CaO | 0.25 |
| Total | $\overline{\text{100.00}}$ |

A mixture of the compounds set forth hereinabove in the amounts indicated was attrition milled and hot pressed as in Example 1. An α- to β-ratio of 30:70 was obtained.

### EXAMPLE 4

| Compound | Amount Wt % |
|---|---|
| Si₃N₄ | 90.29 |
| AlN | 5.84 |
| Y₂O₃ | 2.33 |
| SrO | 1.29 |
| CaO | 0.25 |
| Total | $\overline{\text{100.00}}$ |

A mixture of the compounds set forth hereinabove in the amounts indicated was attrition milled and hot pressed as in Example 1. An α- to β-ratio of 40:60 was obtained.

### Example 5

| Compound | Amount Wt % |
|---|---|
| Si₃N₄ | 87.71 |
| AlN | 7.38 |
| Y₂O₃ | 3.0 |
| SrO | 1.66 |
| CaO | 0.25 |
| Total | $\overline{\text{100.00}}$ |

A mixture of the compounds set forth hereinabove in the amounts indicated was attrition milled and hot pressed as in Example 1. An α- to β- ratio of 50:50 was obtained. This sample demonstrated a surface hardness of 1931 Kg/mm².

### EXAMPLE 6

| Compound | Amount Wt % |
|---|---|
| Si3N4 | 85.14 |
| AlN | 8.91 |
| Y₂O₃ | 3.67 |
| SrO | 2.03 |
| CaO | 0.25 |
| Total | $\overline{\text{100.00}}$ |

A mixture of the compounds set forth hereinabove in the amounts indicated was attrition milled and hot pressed as in Example 1. An α- to β-ratio of 60:40 was obtained.

### EXAMPLE 7 (Comparative)

| Compound | Amount Wt % |
|---|---|
| Si₃N₄ | 74.79 |
| AlN | 15.06 |
| Y₂O₃ | 6.38 |
| SrO | 3.52 |
| CaO | 0.25 |
| Total | $\overline{\text{100.00}}$ |

A mixture of the compounds set forth hereinabove in the amounts indicated was attrition milled and hot pressed as in Example 1. An α- to β- ratio of 100:0 was obtained.

X-ray diffraction showed both α- and β- phases present in the samples. SEM showed 3 kinds of grains (1) large, elongate grains (diameter >1µm); (2) fine, elongate grains (diameter <0.2µm); and (3) an intergranular amorphous phase. EMPA and ATEM indicated that the large grains were β-SiAlON and the two fine grains were α-SiAlON containing Y, Sr and Ca. SEM also showed about 5 to 6 volume percent of the intergranular amorphous phase consisting mainly of Si, Ca, Al, Y, Sr, O and N.

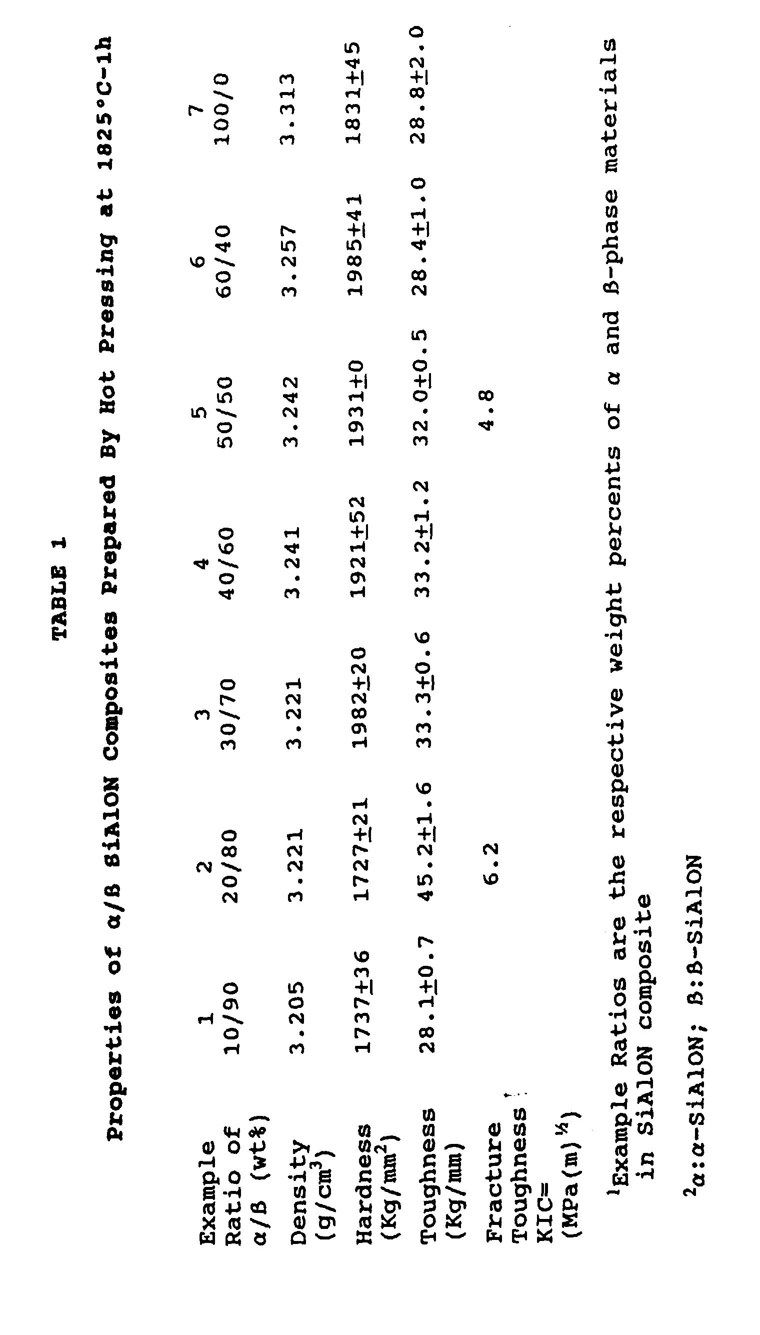

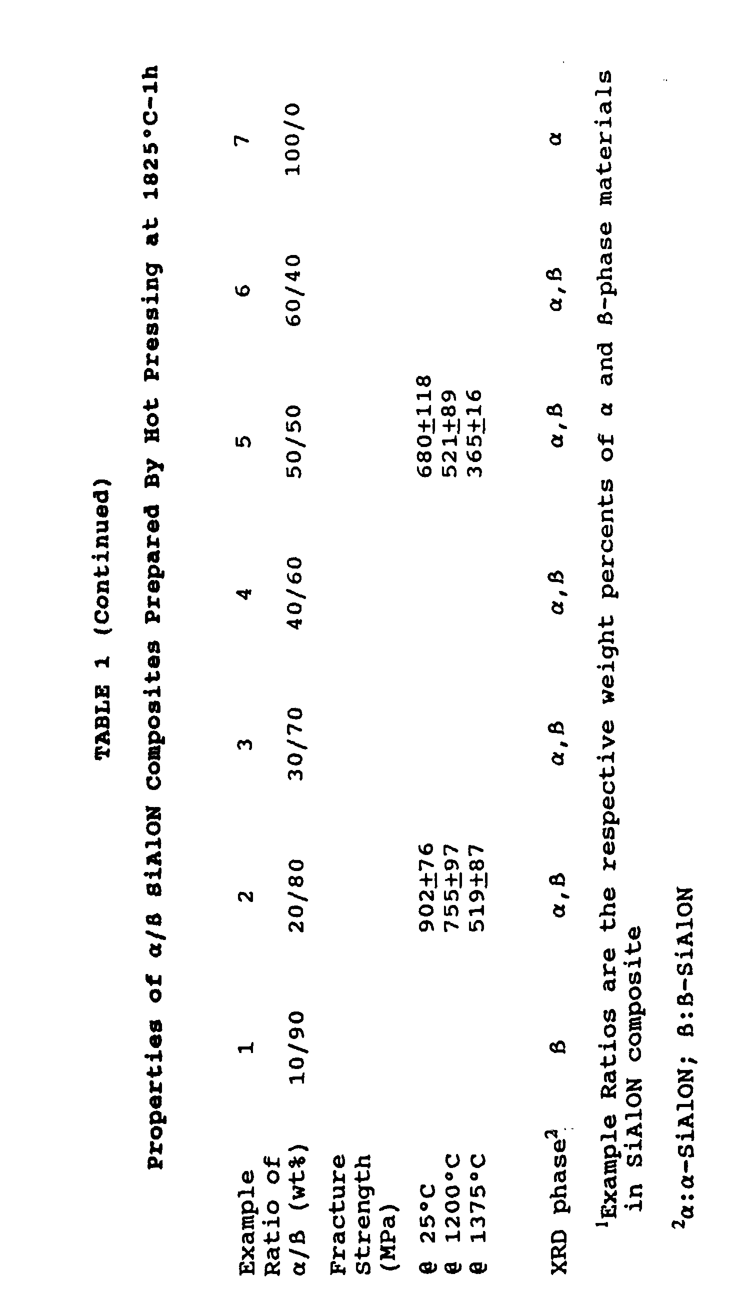

From the results of Examples 1-7 as shown on Table 1, it can be seen that the fracture toughness and fracture strength compare very favorably with prior art materials. The material of the present invention provides a ceramic material that exhibits high hardness, excellent strength at elevated temperatures, and good oxidation and creep resistance.

While our invention has been described in terms of specific embodiments, it will be appreciated that other embodiments could readily be adapted by one skilled in the art. Accordingly, the scope of the invention is to be limited only by the following claims.

## Claims

1. A multi-phase SiAlON ceramic material that contains a mixture of at least three phases, comprising:
(a) a first phase of α-SiAlON represented by general formula Mₓ(Si,Al)₁₂(O,N)₁₆, wherein 0 < x ≤ 2 and M is a mixture of (i) Sr; (ii) at least one element selected from Ca, Mg, Li and Na; and (iii) at least one element selected from the rare earth elements and yttrium, said phase including fine elongate grains and fine equiaxed grains both having diameters of less than 0.2 µm;
(b) a second phase of beta-SiAlON represented by general formula Si_{6-y}Al_{y}O_{y}N_{8-y}, wherein 0 < y ≤ 4.3, said phase including large elongate grains having a diameter less than 2.0 µm; and
(c) a third phase of an intergranular amorphous morphology containing Si, Al, O, and N, combined with a mixture of (i) Sr; (ii) at least one element selected from Ca, Mg, Li and Na; and (iii) at least one element selected from rare earth elements or yttrium,
said ceramic material exhibiting high hardness, excellent strength at elevated temperatures and good oxidation resistance.

2. A ceramic material as claimed in Claim 1, wherein 0 < y ≤ 1, the third phase is present in an amount greater than 0 and less than 15 percent by volume based upon total material volume, and the weight ratio of alpha-SiAlON to beta-SiAlON is from 10:90 to 90:10.

3. A ceramic material as claimed in Claim 1 or Claim 2, wherein (i) is present in an amount between 0.15 and 5.0 percent by weight, (ii) is present in an amount between 0.10 and 10.0 percent by weight, and (iii) is present in an amount between 0.1 and 10.0 percent by weight, all percentages being based upon weight of the ceramic material.

4. A ceramic material as claimed in Claim 3, wherein M is a mixture of Sr, Ca, and Y and 0 < x ≤ 2.

5. A ceramic material as claimed in any one of the preceding claims, wherein the material has a fracture strength of at least 350 MPa at 1375°C in air and a Vickers hardness of at least 1700 Kg/mm² at room temperature.

6. A ceramic material as claimed in any one of the preceding claims, wherein x is less than 1 and y is less than 2.

7. A ceramic material as claimed in Claim 6, wherein y is less than 1.

8. A ceramic material as claimed in any one of the preceding claims, wherein the weight percent ratio of α- to β- SiAlON is 20:80 to 60:40.

9. A ceramic material as claimed in any one of the preceding claims, where both the first and third phases contain Sr, Ca and Y.

10. A process of producing a SiAlON ceramic material as claimed in Claim 1 comprising the steps of:
(a) preparing a mixture of precursor materials wherein all percentages are based on total weight of precursor materials that includes Si₃N₄ in an amount between 75 and 98 weight percent, AlN in an amount between 0.2 and 20 weight percent, and a multi-cationic mixture composition, that includes (i) a compound selected from oxides and nitrides of Sr in an amount between 0.15 and 5.0 weight percent, (ii) at least one compound selected from oxides and nitrides of Ca, Mg, Li and Na in an amount between 0.10 and 10.0 weight percent, and (iii) at least one compound selected from oxides and nitrides of yttrium or rare earth elements in an amount between 0.1 an 10.0 weight percent;
(b) attrition milling the mixture with attritor media in a solvent followed by drying and separating the mixture from the attritor media; and
(c) hot pressing the mixture at a pressure of between 20.7 MPa (3,000 psi) and 41.3 MPa (6,000 psi) and a temperature of between 1550°C and 1950°C for at least 15 minutes.

11. A process as claimed in Claim 10, wherein compound (i) is present in an amount between 0.20 and 3.0 weight percent, compound (ii) is present in an amount between 0.10 and 10.0 weight percent, and compound (iii) is present in an amount between 0.1 and 10.0 weight percent, all percentages being based upon total weight of precursor materials.

12. A process as claimed in Claim 10, wherein the mixture of precursor materials contains AlN in an amount between 1.0 and 10 percent by weight, (i) is SrO or Sr₃N₂ in an amount between 0.50 and 2.0 percent by weight, (ii) in an amount between 0.2 and 5.0 percent by weight, and (iii) in an amount between 0.3 and 5.0 percent by weight, all percentages being based on total weight of precursor materials, the balance being Si₃N₄.

13. A process as claimed in Claim 10, wherein AlN is present in an amount between 1.0 and 10.0 weight percent, (i) is SrO in an amount between 0.50 and 2.0 weight percent, (ii) is CaO in an amount between 0.50 and 5.0 weight percent, and (iii) is Y₂O₃ in an amount between 0.3 and 5.0 weight percent, all percentages being based upon total weight of precursor materials, the balance being Si₃N₄.

14. A process as claimed in Claim 10, wherein SrO is present in an amount between 0.5 and 2.0 weight percent; CaO is present in an amount between 0.10 an 0.50 weight percent; and Y₂O₃ is present in an amount between 1.0 and 5.0 weight percent.

## Patentansprüche

1. Ein Multi-Phasen SiAlON-Keramikmaterial das ein Gemisch von mindestens drei Phasen beinhaltet, umfassend:
(a) eine erste Phase des α-SiAlON dargestellt durch die allgemeine Formel Mₓ(Si,Al)₁₂(O,N)₁₆ , worin 0 < x ≤ 2 und M ein Gemisch von (i) Sr; (ii) mindestens ein Element ausgewählt aus Ca, Mg, Li und Na; und (iii) mindestens ein Element ausgewählt aus den Seltenerdmetallen und Yttrium, wobei diese Phase feine längliche Körner und feine gleichachsige Körner enthält, die beide Durchmesser von weniger als 0,2 µm haben;
(b) eine zweite Phase β-SiAlON dargestellt durch die allgemeine Formel Si_{6-y}Al_{y}O_{y}N_{8-y} worin O < y ≤ 4,3, wobei diese Phase große längliche Körner mit einem Durchmesser von weniger als 2,0 µm enthält; und
(c) eine dritte Phase mit einer intergranulären amorphen Morphologie beinhaltend Si, Al, O und N verbunden mit einem Gemisch von (i) Sr; (ii) mindestens einem Element, ausgewählt aus Ca, Mg, Li und Na; und (iii) mindestens einem Element ausgewählt von Seltenerdelementen oder Yttrium,
wobei sich dieses keramische Material durch hohe Härte, ausgezeichnete Festigkeit bei erhöhten Temperaturen und gute Oxidationswiderstandsfähigkeit auszeichnet.

2. Keramikmaterial gemäß Anspruch 1, worin 0 < y ≤ 1, die dritte Phase in einem Anteil größer als 0 und weniger als 15 Volumenprozent bezogen auf das Gesamtmaterial Volumen enthalten ist und das Gewichtsverhältnis von α-SiAlON zu β-SiAlON von 10:90 bis 90:10 ist.

3. Keramikmaterial nach Anspruch 1 oder 2, worin (i) in einem Anteil zwischen 0,15 und 5,0 Gewichtsprozent vorhanden ist, (ii) in einem Anteil zwischen 0,10 und 10,0 Gewichtsprozent vorhanden ist und (iii) in einem Anteil zwischen 0,1 und 10,0 Gewichtsprozent vorhanden ist, wobei sich alle Prozentangaben auf das Gewicht des Keramikmaterials beziehen.

4. Keramikmaterial gemäß Anspruch 3, worin M ein Gemisch aus Sr, Ca und Y ist und 0 < x ≤ 2 ist.

5. Keramikmaterial nach einem der vorhergehenden Ansprüche, worin das Material eine Bruchfestigkeit von mindestens 350 MPa bei 1375°C an Luft und eine Vickers-Härte von mindestens 1700 kg/mm² bei Raumtemperatur hat.

6. Keramikmaterial nach einem der vorhergehenden Ansprüche, worin x weniger als 1 ist und y weniger als 2 ist.

7. Keramikmaterial nach Anspruch 6, worin y weniger als 1 ist.

8. Keramikmaterial nach einem der vorhergehenden Ansprüche, worin das Gewichtsprozentverhältnis von α- zu β-SiAlON 20:80 bis 60:40 ist.

9. Keramikmaterial nach einem der vorhergehenden Ansprüche, worin sowohl die erste als auch die dritte Phase Sr, Ca und Y enthalten.

10. Verfahren zur Herstellung eines SiAlON-Keramikmaterials nach Anspruch 1, umfassend die Schritte:
(a) Herstellen eines Gemisches von Precursormaterialien, worin alle Prozentangaben auf das Gesamtgewicht der Precursormaterialien bezogen sind, das Si₃N₄ in einem Anteil zwischen 75 und 98 Gewichtsprozent, AlN in einem Anteil zwischen 0,2 und 20 Gewichtsprozent und eine multikationische Gemischzusammensetzung enthält, die (i) eine Verbindung ausgewählt aus Oxiden und Nitriden von Sr in einem Anteil zwischen 0,15 und 5,0 Gewichtsprozent, (ii) mindestens eine Verbindung ausgewählt aus Oxiden und Nitriden von Ca, Mg, Li und Na in einem Anteil zwischen 0,10 und 10,0 Gewichtsprozent und (iii) mindestens eine Verbindung ausgewählt aus Oxiden und Nitriden von Yttrium oder Seltenerdelementen in einem Anteil zwischen 0,1 und 10,0 Gewichtsprozent beinhaltet;
(b) Attritormahlen des Gemisches mit Reibmedium in einem Lösungsmittel gefolgt von Trocknung und Abtrennung des Gemisches von dem Reibmedium; und
(c) Heißpressen des Gemisches bei einem Druck zwischen 20,7 MPa (3000 psi) und 41,3 MPa (6000 psi) und einer Temperatur zwischen 1550°C und 1950°C für mindestens 15 Minuten.

11. Verfahren nach Anspruch 10, worin Verbindung (i) in einem Anteil zwischen 0,20 und 3,0 Gewichtsprozent vorhanden ist, Verbindung (ii) in einem Anteil zwischen 0,10 und 10,0 Gewichtsprozent vorhanden ist und Verbindung (iii) in einem Anteil zwischen 0,1 und 10,0 Gewichtsprozent vorhanden ist, wobei alle Prozentangaben auf das Gesamtgewicht der Precursormaterialien bezogen sind.

12. Verfahren nach Anspruch 10, worin das Gemisch der Vorläufermaterialien AlN in einem Anteil zwischen 1,0 und 10 Gewichtsprozent enthält, (i) SrO oder Sr₃N₂ in einem Anteil zwischen 0,50 und 2,0 Gewichtsprozent, (ii) in einem Anteil zwischen 0,2 und 5,0 Gewichtsprozent und (iii) in einem Anteil zwischen 0,3 und 5,0 Gewichtsprozent beinhaltet, wobei alle Prozentangaben auf das Gesamtgewicht der Precursormaterialien bezogen sind, wobei der Rest Si₃N₄ ist.

13. Verfahren nach Anspruch 10, worin AlN in einem Anteil zwischen 1,0 und 10,0 Gewichtsprozent enthalten ist, (i) SrO in einem Anteil zwischen 0,50 und 2,0 Gewichtsprozent ist, (ii) CaO in einem Anteil zwischen 0,50 und 5,0 Gewichtsprozent ist und (iii) Y₂O₃ in einem Anteil zwischen 0,3 und 5,0 Gewichtsprozent ist, wobei alle Prozentangaben auf das Gesamtgewicht der Precursormaterialien bezogen sind, wobei der Rest Si₃N_{4 ist}.

14. Verfahren nach Anspruch 10, worin SrO in einem Anteil zwischen 0,5 und 2,0 Gewichtsprozent vorhanden ist; CaO in einem Anteil zwischen 0,10 und 0,50 Gewichtsprozent vorhanden ist; und Y₂O₃ in einem Anteil zwischen 1,0 und 5,0 Gewichtsprozent vorhanden ist.

## Revendications

1. Matière céramique SiAlON à multiples phases qui contient un mélange d'au moins trois phases, comprenant:
(a) une première phase de SiAlON-α représentée par la formule générale Mₓ(Si,Al)₁₂(O,N)₁₆, dans laquelle 0 < x ≤ 2 et M est un mélange de (i) Sr; (ii) au moins un élément choisi parmi Ca, Mg, Li et Na; et (iii) au moins un élément choisi parmi les éléments des terres rares et l'yttrium, ladite phase comprenant des grains fins allongés et des grains équiaxiaux fins, les deux possédant des diamètres inférieurs à 0,2 µm;
(b) une deuxième phase de SiAlON bêta représentée par la formule générale Si_{6-y}Al_{y}O_{y}N_{8-y}, dans laquelle 0 < y ≤ 4,3, ladite phase comprenant des gros grains allongés possédant un diamètre inférieur à 2,0 µm; et
(c) une troisième phase d'une morphologie amorphe intergranulaire contenant Si, Al, O, et N combiné avec un mélange de (i) Sr; (ii) au moins un élément choisi parmi Ca, Mg, Li et Na; et (iii) au moins un élément choisi parmi les éléments des terres rares ou l'yttrium,
ladite matière céramique présentant une dureté élevée, une excellente résistance mécanique aux températures élevées et une bonne résistance à l'oxydation.

2. Matière céramique selon la revendication 1, dans laquelle 0 < y ≤ 1, la troisième phase étant présente en une quantité supérieure à 0 et inférieure à 15% en volume par rapport au volume total de la matière, et le rapport pondéral de SiAlON-α à SiAlON-β est compris entre 10:90 et 90:10.

3. Matière céramique selon l'une des revendications 1 ou 2, dans laquelle (i) est présent à raison de 0,15 à 5,0 % en poids, (ii) est présent à raison de 0,10 à 10,0% en poids, et (iii) est présent à raison de 0,1 à 10,0% en poids, tous les pourcentages étant par rapport au poids de la matière céramique.

4. Matière céramique selon la revendication 3, dans laquelle M est un mélange de Sr, Ca et Y et 0 < x ≤ 2.

5. Matière céramique selon l'une des revendications précédentes, dans laquelle la matière possède une résistance à la rupture d'au moins 350 MPa à 1 375°C dans l'air et une dureté Vickers d'au moins 1 700 kg/mm² à la température ambiante.

6. Matière céramique selon l'une des revendications précédentes, dans laquelle x est inférieur à 1 et y est inférieur à 2.

7. Matière céramique selon la revendication 6, dans laquelle y est inférieur à 1.

8. Matière céramique selon l'une des revendications précédentes, dans laquelle le rapport des pourcentages pondéraux de SiAlON-α à SiAlON-β est compris entre 20:80 et 60:40.

9. Matière céramique selon l'une des revendications précédentes, dans laquelle à la fois les premières et troisièmes phases contiennent Sr, Ca et Y.

10. Procédé de production d'une matière céramique SiAlON selon la revendication 1 comprenant les étapes consistant:
(a) à préparer un mélange de matières précurseurs dans lequel tous les pourcentages sont par rapport au poids total des matières précurseurs qui comprend Si₃N₄ en une quantité comprise entre 75 et 98% en poids, AlN en une quantité comprise entre 0,2 et 20% en poids, et une composition de mélange à cations multiples, qui comprend (i) un composé choisi parmi - les oxydes et les nitrures de Sr en quantité comprise entre 0,15 et 5,0% en poids, (ii) au moins un composé choisi parmi les oxydes et les nitrures de Ca, Mg, Li et Na en quantité comprise entre 0,10 et 10,0% en poids, et (iii) au moins un composé choisi parmi les oxydes et les nitrures d'yttrium ou d'éléments des terres rares en quantité comprise entre 0,1 et 10,0% en poids;
(b) à broyer par attrition le mélange à l'aide de milieux d'abrasion dans un solvant puis à sécher et à séparer le mélange d'avec les milieux d'abrasion; et
(c) à presser à chaud le mélange sous une pression comprise entre 20,7 MPa (3 000 psi) et 41,3 MPA (6 000 psi) et à une température comprise entre 1 550°C et 1 950°C pendant au moins 15 minutes.

11. Procédé selon la revendication 10, dans lequel le composé (i) est présent à raison de 0,20 à 3,0% en poids, le composé (ii) est présent à raison de 0,10 à 10,0% en poids, et le composé (iii) est présent à raison de 0,1 à 10,0% en poids, tous les pourcentages étant par rapport au poids total des matières précurseurs.

12. Procédé selon la revendication 10, dans lequel le mélange de matières précurseurs contient du AlN en quantité comprise entre 1,0 et 10,0% en poids, (i) est SrO ou Sr₃N₂ en quantité comprise entre 0,50 et 2,0% en poids, (ii) est en quantité comprise entre 0,2 et 5,0% en poids, et (iii) est en quantité comprise entre 0,3 et 5,0% en poids, tous les pourcentages étant par rapport au poids total des matières précurseurs, le complément étant Si₃N₄.

13. Procédé selon la revendication 10, dans lequel AlN est présent à raison de 1,0 à 10,0% en poids, (i) est SrO en quantité comprise entre 0,50 et 2,0% en poids, (ii) est CaO en quantité comprise entre 0,50 et 5,0% en poids, (iii) est Y₂O₃ en quantité comprise entre 0,3 et 5,0% en poids, tous les pourcentages étant par rapport au poids total des matières précurseurs, le complément étant Si₃N₄.

14. Procédé selon la revendication 10, dans lequel SrO est présent à raison de 0,5 à 2,0% en poids; CaO est présent à raison de 0,10 à 0,50% en poids; et Y₂O₃ est présent à raison de 1,0 à 5,0% en poids.
